(19) **Europäisches Patentamt / European Patent Office / Office européen des brevets**

(11) **EP 4 750 067 A1**

(12) **EUROPEAN PATENT APPLICATION**
published in accordance with Art. 153(4) EPC

(43) Date of publication:
**27.05.2026 Bulletin 2026/22**

(21) Application number: **24844728.6**

(22) Date of filing: **19.07.2024**

(51) International Patent Classification (IPC):
**H04N 21/431** (2011.01)   **H04N 21/485** (2011.01)
**H04N 21/2187** (2011.01)

(86) International application number:
**PCT/CN2024/106443**

(87) International publication number:
**WO 2025/021037 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.07.2023   CN 202310906588**

(71) Applicant: **Beijing Zitiao Network Technology Co., Ltd.**
**Beijing 100190 (CN)**

(72) Inventor: **SHEN, Huaiye**
**Beijing 100028 (CN)**

(74) Representative: **Grünecker Patent- und Rechtsanwälte**
**PartG mbB**
**Leopoldstraße 4**
**80802 München (DE)**

(54) **LIVE STREAM PICTURE DISPLAY METHOD AND APPARATUS, COMPUTER DEVICE AND STORAGE MEDIUM**

(57)   Provided in the present disclosure are a live stream picture display method and apparatus, a computer device and a storage medium, the method comprising: according to the current live stream scene, displaying at least one display window matched with the live stream scene; acquiring display parameter information of live stream picture elements in the display window, the live stream picture elements comprising a live stream scene image and/or an interaction control, and the display parameter information being determined on the basis of window size information of the display window and original size information corresponding to the live stream picture elements to be displayed in the display window; and, according to a display proportion indicated by the display parameter information, adjusting the original size information corresponding to the live stream picture elements to be displayed, so as to obtain adjusted target size information and, on the basis of a display position indicated by the display parameter information, displaying in the display window the live stream picture elements of the target size information.

EP 4 750 067 A1

According to a current live streaming scene, displaying at least one display window that matches the current live streaming scene — S201

Acquiring display parameter information of a live streaming image element in the display window; where the live streaming image element includes a live streaming scene image and/or an interaction control, and the display parameter information is determined based on window size information of the display window and original size information corresponding to a live streaming image element to be displayed in the display window — S202

Adjusting the original size information corresponding to the live streaming image element to be displayed according to a display scale indicated by the display parameter information, to obtain target size information after adjustment, and displaying, in the display window, a live streaming image element under the target size information based on a display position indicated by the display parameter information — S203

Fig. 2

## Description

The present application claims priority of the Chinese Patent Application No. 202310906588.6, filed on July 21, 2023, the disclosure of which is incorporated herein by reference in its entirety as part of the present application.

TECHNICAL FIELD

Embodiments of the present disclosure relate to a display method of a live streaming image, a display apparatus of a live streaming image, a computer device and a storage medium.

BACKGROUND

In live streaming scenes such as video chat and multi-user live audio interaction, live streaming images of multiple users may be displayed on one screen. In the display window of each live streaming user on the screen, elements such as a scene image and some interaction controls are usually are set. However, due to changes in the number of users in the live streaming scene, the size and position of the display window may change accordingly. As a result, the elements are stretched or cropped easily when displayed in association.

SUMMARY

Embodiments of the present disclosure at least provide a display method of a live streaming image, a display apparatus of a live streaming image, a computer device and a storage medium.

In a first aspect, an embodiment of the present disclosure provides a display method of a live streaming image, which includes: displaying at least one display window that matches a current live streaming scene according to the current live streaming scene; acquiring display parameter information of a live streaming image element in the display window; where the live streaming image element includes a live streaming scene image and/or an interaction control, and the display parameter information is determined based on window size information of the display window and original size information corresponding to a live streaming image element to be displayed in the display window; and adjusting the original size information corresponding to the live streaming image element to be displayed according to a display scale indicated by the display parameter information, to obtain target size information after adjustment, and displaying, in the display window, a live streaming image element with the target size information based on a display position indicated by the display parameter information.

In an optional implementation, for the live streaming scene image included in the live streaming image element, the display parameter information includes a display scale, and display parameter information of the live streaming scene image in the display window is determined according to following steps: determining a size feature of the live streaming scene image in the display window, based on size information of original size information of the live streaming scene image and size information of the window size information of the display window in at least one size dimension respectively; where the at least one size dimension includes a width size dimension and a height size dimension; determining a target size dimension from the at least one size dimension based on the size feature of the live streaming scene image; and determining a ratio between size information corresponding to the original size information of the live streaming scene image in the target size dimension and size information corresponding to the window size information of the display window in the target size dimension, as the display scale.

In an optional implementation, the determining a size feature of the live streaming scene image in the display window, based on size information of original size information of the live streaming scene image and size information of the window size information of the display window in at least one size dimension respectively, includes: determining first width information in the width size dimension and first height information in the height size dimension in the original size information of the live streaming scene image, and determining a first ratio between the first width information and the first height information; determining second width information in the width dimension and second height information in the height dimension in the window size information of the display window, and determining a second ratio between the second width information and the second height information; and in response to the first ratio being smaller than or equal to the second ratio, determining the size feature corresponding to the live streaming image element to be a first size feature; or, in response to the first ratio being greater than the second ratio, determining the size feature corresponding to the live streaming image element to be a second size feature; and where the determining a target size dimension from the at least one size dimension based on the size feature of the live streaming scene image, includes: in response to determining the size feature to be the first size feature, determining the width size dimension as the target size dimension, or, in response to determining the size feature to be the second size feature, determining the height size dimension as the target size dimension.

In an optional implementation, for the live streaming scene image included in the live streaming image element, the display parameter information includes a display position, and the display parameter information of the live streaming image element in the display window is determined according to following steps: determining a center position corresponding to a window display center of the display window, and determining the center position as the display position of the live streaming scene image, so that an element boundary in the target size dimension for a live streaming scene image after being adjusted based on the display scale coincides with a window boundary of the display window in the target size dimension.

In an optional implementation, for the interaction control included in the live streaming image element, the display parameter information includes a display scale and a display position; and display parameter information of the interaction control in the display window is determined according to following steps: determining a display scale in the display window for the interaction control based on standard window size information that is preset and the window size information of the display window; and determining a display position of the interaction control in the display window based on a target boundary distance between the interaction control and the display window under the standard window size information, so that a boundary distance between the interaction control at the display position and a current display window maintains the target boundary distance.

In an optional implementation, the determining a display scale in the display window for the interaction control based on standard window size information that is preset and the window size information of the display window, includes: determining a ratio between the standard window size information and the window size information of the display window in a preset size dimension, to determine the display scale of the interaction control in the display window based on the ratio in the preset size dimension and original size information corresponding to the interaction control.

In an optional implementation, the acquiring display parameter information of a live streaming image element in the display window, includes: determining display parameter information corresponding to a current display window from candidate display scales and candidate display positions corresponding to a plurality of preset display window sizes respectively.

In a second aspect, an embodiment of the present disclosure further provides a display apparatus of a live streaming image, which includes a first display module, an acquiring module and a second display module. The first display module is configured to display at least one display window that matches a current live streaming scene according to the current live streaming scene. The acquiring module is configured to acquire display parameter information of a live streaming image element in the display window; where the live streaming image element includes a live streaming scene image and/or an interaction control, and the display parameter information is determined based on window size information of the display window and original size information corresponding to a live streaming image element to be displayed in the display window. The second display module is configured to adjust the original size information corresponding to the live streaming image element to be displayed according to a display scale indicated by the display parameter information, to obtain target size information after adjustment, and display, in the display window, a live streaming image element with the target size information based on a display position indicated by the display parameter information.

In an optional implementation, for the live streaming scene image included in the live streaming image element, the display parameter information includes a display scale, and the acquiring module is configured to determine display parameter information of the live streaming scene image in the display window according to following steps: determining a size feature of the live streaming scene image in the display window, based on size information of original size information of the live streaming scene image and size information of the window size information of the display window in at least one size dimension respectively; where the at least one size dimension includes a width size dimension and a height size dimension; determining a target size dimension from the at least one size dimension based on the size feature of the live streaming scene image; and determining a ratio between size information corresponding to the original size information of the live streaming scene image in the target size dimension and size information corresponding to the window size information of the display window in the target size dimension, as the display scale.

In an optional implementation, when determining the size feature of the live streaming scene image in the display window, based on the size information of the original size information of the live streaming scene image and the window size information of the display window in the at least one size dimension respectively, the acquiring module is configured to: determine first width information in the width size dimension and first height information in the height size dimension in the original size information of the live streaming scene image, and determine a first ratio between the first width information and the first height information; determine second width information in the width dimension and second height information in the height dimension in the window size information of the display window, and determine a second ratio between the second width information and the second height information; and in response to the first ratio being smaller than or equal to the second ratio, determine the size feature corresponding to the live streaming image element to be a first size feature; or, in response to the first ratio being greater than the second ratio, determine the size feature corresponding to the live streaming image element to be a second size feature. When determining the target size dimension from the at least one size dimension based on the size feature of the live streaming scene image, the acquiring module is configured to: in response to determining the size feature to be the first size feature, determine the width size dimension as the target size dimension, or, in response to determining the size feature to be the second size feature, determine the height size dimension as the target size dimension.

In an optional implementation, for the live streaming scene image included in the live streaming image element, the display parameter information includes a display position, and the acquiring module is configured to determine the display parameter information of the live streaming image element in the display window according to following steps: determining a center position corresponding to a window display center of the display window, and determining the center position as the display position of the live streaming scene image, so that an element boundary in the target size dimension for a live streaming scene image after being adjusted based on the display scale coincides with a window boundary of the display window in the target size dimension.

In an optional implementation, for the interaction control included in the live streaming image element, the display parameter information includes a display scale and a display position; and the acquiring module is configured to determine display parameter information of the interaction control in the display window according to following steps: determining a display scale in the display window for the interaction control based on standard window size information that is preset and the window size information of the display window; and determining a display position of the interaction control in the display window based on a target boundary distance between the interaction control and the display window under the standard window size information, so that a boundary distance between the interaction control at the display position and a current display window maintains the target boundary distance.

In an optional implementation, when determining the display scale in the display window for the interaction control based on the standard window size information that is preset and the window size information of the display window, the acquiring module is configured to: determine a ratio between the standard window size information and the window size information of the display window in a preset size dimension, to determine the display scale of the interaction control in the display window based on the ratio in the preset size dimension and the original size information corresponding to the interaction control.

In an optional implementation, when acquiring the display parameter information of the live streaming image element in the display window, the acquiring module is configured to determine display parameter information corresponding to a current display window from candidate display scales and candidate display positions corresponding to a plurality of preset display window sizes respectively.

In a third aspect, an optional implementation of the present disclosure further provides a computer device which includes a processor and a memory. The memory stores machine-readable instructions executable by the processor, and the processor is configured to execute the machine-readable instructions stored in the memory, and when the machine-readable instructions are executed by the processor, the processor executes the steps in the above-mentioned first aspect or in any possible implementation of the first aspect.

In a fourth aspect, an optional implementation of the present disclosure further provides a computer-readable storage medium, a computer program is stored on the computer-readable storage medium, and when the computer program is run, the steps in the above-mentioned first aspect or in any possible implementation of the first aspect are executed.

In order to make the above purposes, features and advantages of the present disclosure more obvious and understandable, preferred embodiments are cited below attached with accompanying drawings, and are described in detail as follows.

BRIEF DESCRIPTION OF DRAWINGS

In order to illustrate the technical solutions of the embodiments of the present disclosure more clearly, the drawings required to be used in the embodiments are briefly introduced below. The drawings are incorporated into the specification and form a part of the specification. The drawings show the embodiments that conform to the present disclosure, and are used together with the specification to illustrate the technical solutions of the present disclosure. It should be understood that the following drawings only show some embodiments of the present disclosure, and therefore should not be regarded as a limitation of the scope. Other related drawings can also be derived from these drawings by those ordinarily skilled in the art without creative efforts.

Fig. 1 shows a schematic diagram of a display window provided by an embodiment of the present disclosure;

Fig. 2 shows a flow chart of a displaying method of a live streaming image provided by an embodiment of the present disclosure;

Fig. 3 shows a schematic diagram of comparing size features of a live streaming scene image and a display window provided by an embodiment of the present disclosure;

Fig. 4 shows a schematic diagram of a live streaming scene image obtained after processing the live streaming scene image according to a determined display scale provided by an embodiment of the present disclosure;

Fig. 5 shows a schematic diagram of a live streaming scene image obtained after performing image supplementation on the live streaming scene image provided by an embodiment of the present disclosure;

Fig. 6 shows a schematic diagram of a live streaming scene image obtained after performing semantic supplementation on the live streaming scene image provided by an embodiment of the present disclosure;

Fig. 7 shows a schematic diagram of a standard window provided by an embodiment of the present disclosure;

Fig. 8 shows a schematic diagram of a coordinate system determined for a current display window provided by an embodiment of the present disclosure;

Fig. 9 shows a schematic diagram of displaying a live streaming image element in a current display window provided by an embodiment of the present disclosure;

Fig. 10 shows a schematic diagram of a display apparatus of a live streaming image provided by an embodiment of the present disclosure;

Fig. 11 shows a schematic diagram of a computer device provided by an embodiment of the present disclosure.

DETAILED DESCRIPTION

In order to make the purposes, technical solutions and advantages of the embodiments of the present disclosure clearer, the technical solutions in the embodiments of the present disclosure are clearly and completely described below in conjunction with the accompanying drawings in the embodiments of the present disclosure. Obviously, the described embodiments are only some embodiments of the present disclosure, not all embodiments. The components of the embodiments of the present disclosure, as generally described and illustrated herein, could be arranged and designed in a variety of different configurations. Thus, the following detailed description of the embodiments of the disclosure is not intended to limit the scope of the disclosure, as claimed, but is merely representative of selected embodiments of the disclosure. Based on the embodiments of the present disclosure, all other embodiments obtained by those skilled in the art without creative efforts fall within the scope of protection of the present disclosure.

Research has found that in a live streaming scene, each live streaming user has a display window displayed on the screen, and elements such as scene images and interaction controls can be displayed in the display window. During the live streaming process, due to changes in the number of users participating in the live streaming, in order to carry the display windows corresponding to all live streaming users on the screen, the size and position of the display windows may change accordingly, and the elements are stretched or cropped easily when displayed in association.

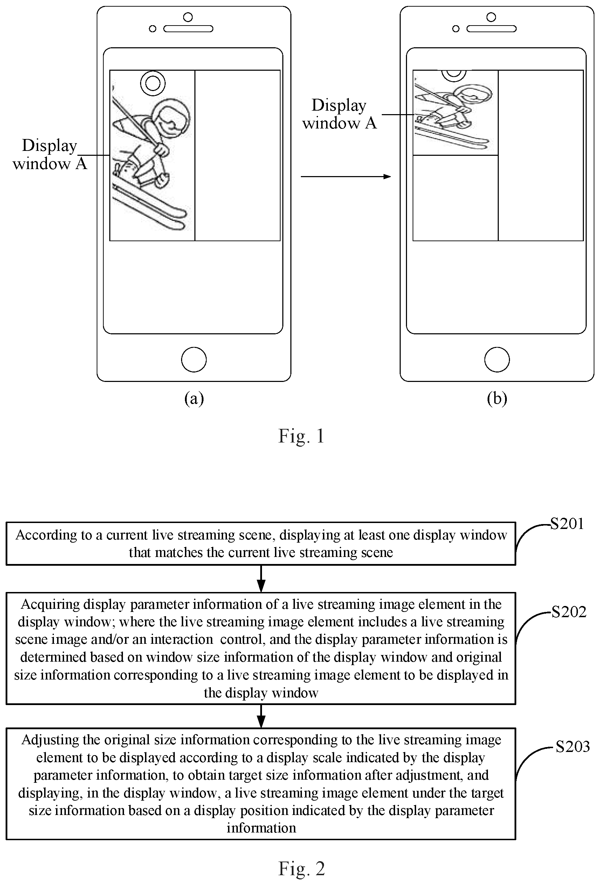

For example, in some possible cases, a scene image displayed in a display window is only adapted to a display window displayed at a size ratio of 1:2, that is, the scene image is not stretched and deformed in the display window having the size ratio of 1:2, and an interaction control is determined to be displayed along the edge in the scene image and at the center position of the upper boundary of the image. For example, referring to the schematic diagram (a) on the left side in Fig. 1, the corresponding live streaming scene has, for example, only two users, then the size ratio of the display window A is 1:2. In the display window A, both of the scene image and the interaction control can be displayed without stretching, deformation and shearing. When the number of the live streaming users changes, for example, when the number of live streaming users changes from two to three, in order to arrange and display the display windows corresponding to three users, the size ratio of the display window A may change to 1:1, which may be referred to the schematic diagram (b) on the right side of Fig. 1 for details. In some possible cases, when the size ratio of the display window changes, the scene image may be selected to fill the display window, and then the case where the scene image in schematic diagram (b) is stretched will occur. At the same time, since the scene image is stretched in the longitudinal direction, the interaction control for association-displayed may be cropped because the display area becomes smaller.

Based on the above research, the present disclosure provides a display method of a live streaming image, which can determine at least one display window that matches the live streaming scene based on the current live streaming scene, and then determine the display parameter information specifically in the display window for the live streaming image element. Here, when determining the display parameter information for the live streaming image element, the window size information of the display window, i.e., the size that can be displayed, and the original size information corresponding to the live streaming image element, i.e., the specific image feature of the live streaming image element, are specifically considered. In this way, the display parameter information determined for the live streaming image element can be used to adjust and display the live streaming image element. While satisfying a requirement that the live streaming image element is completely displayed in the current display window, the live streaming image element can also be displayed according to its image feature to reduce the situation of being stretched or cropped.

The shortcomings of the above solutions are all the results obtained by the inventor after practice and careful research. Therefore, the discovery process of the above problems and the solutions proposed by the present disclosure below to the above problems should all be the contributions made by the inventor in the disclosure process.

It should be noted that similar reference numerals and letters denote similar items in the following drawings, so that once an item is defined in one drawing, it does not require further definition or explanation in subsequent drawings.

In order to facilitate understanding of the present embodiment, a display method of a live streaming image disclosed in an embodiment of the present disclosure is firstly introduced in detail. The execution body of the display method of a live streaming image provided by an embodiment of the present disclosure is generally a computer device that has certain computing capabilities, and the computer device includes, for example: a terminal device, a server or other processing device. The terminal device may be a User Equipment (UE), a mobile device, a user terminal, a terminal, a cellular phone, a cordless phone, a Personal Digital Assistant (PDA), a handheld device, a computing device, a vehicle-mounted device, a wearable device, etc. In some possible implementations, the display method of a live streaming image may be implemented by a processor invoking computer-readable instructions stored a memory.

The display method of a live streaming image provided by the embodiment of the present disclosure will be described below. The display method for a live streaming provided by the embodiment of the present disclosure may be specifically applied to platforms for live streaming, which include but are not limited to video platforms, shopping platforms, lecture platforms, and conference office platforms. During live streaming, one or more users may be live-streaming simultaneously, and the number of users who are live-streaming simultaneously may be determined based on the actual number limit requirements of different platforms. When displaying a live streaming image, the live streaming image can be displayed in the graphics display interface of the device used by a user. When different users use different devices, the size of the corresponding graphics display interface may also be different, which may be referred to the illustration in the following embodiments for details. In addition, for a device using the display method provided by the embodiment of the present disclosure, the user terminal corresponding to the device may be a user terminal for watching the live streaming, such as a viewer who watches the video live connection, or may also be a user terminal for participating in the live streaming, such as a streamer, etc.

Referring to Fig. 2, which is a flow chart of a display method for a live streaming image provided by an embodiment of the present disclosure, the method includes steps S201 to S203.

S201: according to a current live streaming scene, displaying at least one display window that matches the current live streaming scene.

S202: acquiring display parameter information of a live streaming image element in the display window; where the live streaming image element includes a live streaming scene image and/or an interaction control, and the display parameter information is determined based on window size information of the display window and original size information corresponding to a live streaming image element to be displayed in the display window.

S203: adjusting the original size information corresponding to the live streaming image element to be displayed according to a display scale indicated by the display parameter information, to obtain target size information after adjustment, and displaying, in the display window, a live streaming image element with the target size information based on a display position indicated by the display parameter information.

The above S201 to S203 will be described in detail below.

For the above S201, the live streaming scene is firstly explained. According to the above description, for different live streaming platforms, the types of corresponding live streaming scenes are different, such as a scene for live streaming co-host interaction or a meeting scene. Secondly, in different live streaming scenes, display windows may be affected and have differences. For example, in the scene for live streaming co-host interaction, the maximum number of live streaming users may be limited to 5, and when the display window for presenting each live streaming user is arranged, the size ratio of the display window may include 1:1, 1:2, 2:1, etc., so as to display, in the graphical display interface, the display windows corresponding to a plurality of live streaming users as tiled as possible.

Exemplarily, in the schematic diagram of the display window shown in Fig. 1, the schematic diagram (a) on the left shows that when the display windows corresponding to two live streaming users are arranged, the display windows are arranged adjacent to each other, and the size ratio of the display windows is all 1:2. In the schematic diagram (b) on the right, when the number of live streaming users changes to 3, the same adjacent tiling arrangement is selected, and the size of the display window corresponding to each live streaming user is changed due to the increase in the number of users. For example, the size ratio of the original display window A changes from 1:2 to 1:1, so as to reserve a display window area that can be displayed for a newly added live streaming user.

In the live streaming scene listed above, specifically, according to the change in the number of live streaming users, what size ratio that is used to display the display window corresponding to each user under different numbers of live streaming users is determined. In other possible live streaming scenes, the display windows corresponding to different live streaming users may also be determined based on the identity restrictions of the live streaming users. For example, in the teaching platforms or conference office platforms listed in the above examples, the live streaming users can be divided into anchor users (such as teachers or users with an identity of a keynote speaker) and audience users (such as students or users with an identity of attending the conference).

In this case, it is also possible to first divide the graphical display interface used to display the display window in the live streaming scene into different areas corresponding to users with different identities, and then in different areas, determine the display window for these users according to the number of corresponding users. For example, the graphical display interface may be divided into an upper area and a lower area. In the upper area, a display window corresponding to an anchor user is displayed, and in the lower area, a display window corresponding to an audience user is displayed, and based on the change in the number of live streaming users, the display window corresponding to the live streaming user in each area is determined. For example, in the upper area, in response to only one keynote speaker, the size ratio of the corresponding display window is 2:1; and in response to two keynote speakers, the size ratio corresponding to each keynote speaker changes to 1:1, and the total size of specific areas occupied by the two keynote speakers remains unchanged and is the size of the upper area of the graphic display interface.

Thus, for the platform used when displaying a live streaming image and the current live streaming scene determined under the platform, the display window that should be currently displayed (i.e., at least one display window that matches the live streaming scene in the embodiment of the present disclosure) can be determined.

For the above S202, for each determined display window, in the live streaming scene, a plurality of live streaming image elements will be displayed through the live streaming window. Here, the live streaming image element specifically includes a live streaming scene image and/or an interaction control.

Taking a scene for live streaming co-host interaction as an example, the live streaming scene image may be a waiting scene image displayed when it is confirmed that the user has entered the scene for live streaming co-host but the video image has not been displayed, or may also be an effect background image displayed during the live streaming, such as a beach effect image, an ocean effect image, etc. The image here may be a static image or a dynamic effect animated image, which is not specifically limited in the embodiments of the present disclosure.

For the interaction control, it is specifically displayed in the display window in a form of a control identifier, and corresponds to different interaction functions. For example, the interaction control includes a comment interaction control for giving a like, a chat interaction control for performing multi-person voice chats, an effect addition control for adding a display effect in the display window, etc.

When displaying the live streaming image elements, in order to avoid a situation that the image deforms or the interaction control cannot be triggered caused by stretching or cropping the image when displaying the image, in the embodiment of the present disclosure, according to the window size information of the determined display window and the original size information corresponding to the live streaming image element to be displayed, the display parameter information of the live streaming image element in the display window is determined, so as to adjust the original size information of the live streaming image element for effective display.

Here, firstly, the window size information of the display window is explained. In one possible case, the window size information may be represented by using pixel values, for example, the size (expressed in the form of "width × height" in the following examples) is 720px (width) × 1280px (height). The size of the display window will be different in different devices. For example, for a tablet computer with a larger screen size, the size corresponding to the display window in the same display mode is larger than the size corresponding to a mobile phone with a smaller screen size. Therefore, when acquiring the window size information of the display window, the window size information needs to be determined based on the size of the actually used device. Specifically, the specific window size information of the display window in the current live streaming scene may be determined after acquiring user authorization.

The original size information corresponding to the live streaming image element may be specifically determined during design. Taking the waiting scene image explained in the above example as an example, when designing a pattern or selecting an image, the corresponding size information can be determined as the original size information.

In the following, respectively for the live streaming scene image and the interaction control specifically involved in the embodiments of the present disclosure, how to acquire the corresponding display parameter information in the display window is explained.

Firstly, for a live streaming scene image, the specifically determined display parameter information may include a display scale. Specifically, since the live streaming scene image may be scaled to fill the display window, that is, the live streaming scene image is used to fill the entire display window, and the size ratio determined when the live streaming scene image is produced is not necessarily the same as the size ratio of the acquired display window. Therefore, no matter how the live streaming scene image is proportionally scaled without deformation, the size of the live streaming scene image cannot be completely consistent with the size of the display window. When the scaling processing is directly performed to cause the live streaming scene image completely consistent with the size of the display window, the case where the image in Fig. 1 is compressed and deformed may occur. Thus, in the embodiment of the present disclosure, allowing to perform edge cropping and proportional scaling processing on the live streaming scene image is selected, so that the live streaming scene image is scaled to fill the window without deformation.

Specifically, in a possible situation, when the original size information of the live streaming scene image and the window size information of the display window represent that the aspect ratios of the live streaming scene image and the display window are consistent, for example, the original size information of the live streaming scene image is 100px × 200px, and the window size information of the display window is 360px × 720px, then the reflected aspect ratios are both 1:2, then the live streaming scene image is proportionally zoomed in, that is, the same scale in the width dimension and the height dimension is used for zoom-in operation, which makes the processed live streaming scene image be scaled to fill the display window without deformation. When the live streaming scene is zoomed-in, the display scale of the live streaming scene image may be determined by the ratio corresponding to the width information in the size information of the live streaming scene image and the display window, that is, 360/100, and the obtained display scale is zooming in to 3.6 times. The display scale may also be determined by the ratio corresponding to the height information in the size information of the live streaming scene image and the display window, that is, 720/200, and the obtained display scale is also zooming in to 3.6 times.

In other possible situations, the original size information of the live streaming scene image and the window size information of the display window may indicate that the aspect ratios of the live streaming scene image and the display window are inconsistent. This inconsistency leads to that no matter how to zoom in or zoom out the size of the live streaming scene image, the processed live streaming scene image cannot be consistent with the size of the display window.

In this case, the live streaming scene image can be zoomed in or zoomed out, so that the processed live streaming scene image can coincide with the corresponding upper and lower boundaries or left and right boundaries of the display window at the upper and lower boundaries or left and right boundaries, and at the other boundary, the size of the live streaming scene image exceed the size of the display window, so that the live streaming scene image can be displayed as widely as possible in the display window, and the remaining excess parts may be cropped or not be displayed directly due to the limitation of the display window.

Specifically, the specific implementation may be carried out in the following manner: determining a size feature of the live streaming scene image in the display window, based on size information of original size information of the live streaming scene image and size information of the window size information of the display window in at least one size dimension respectively; where the at least one size dimension includes a width size dimension and a height size dimension; determining a target size dimension from the at least one size dimension based on the size feature of the live streaming scene image; and determining a ratio between size information corresponding to the original size information of the live streaming scene image in the target size dimension and size information corresponding to the window size information of the display window in the target size dimension, as the display scale.

Here, the size feature of the live streaming scene image in the display window is firstly explained. Here, the size feature of the live streaming scene image is obtained by comparing the original size information of the live streaming scene image and the window size information of the display window. The size feature here is used to express that the live streaming scene image is a "wider" image or a "narrower" image.

In a possible situation, in order to determine the "wider" size feature or the "narrower" size feature expressed by the live streaming scene image in the display window, the size information in at least one size dimension of the original size information of the live streaming scene image and the window size information of the display window can be selected to determine. For example, the aspect ratio of the live streaming scene image may be determined by the ratio between the width size information corresponding to the width size dimension and the height size information corresponding to the height size dimension in the original size information of the live streaming scene image. Similarly, the aspect ratio of the display window can be determined in the same way by using the window size information of the display window. It is easy to understand that the higher the value of the aspect ratio corresponding to the live streaming scene image, it means that the width corresponding to the live streaming scene image is larger than the height, indicating that the live streaming scene image is a "wider" image. Conversely, a lower value of the aspect ratio indicates a "narrower" image.

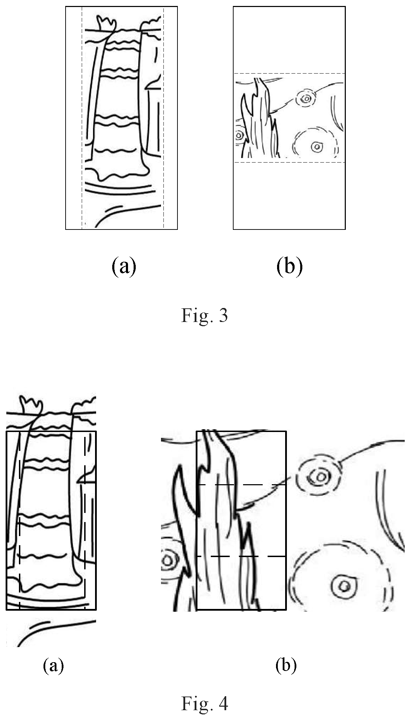

Exemplarily, referring to Fig. 3, which is a schematic diagram of comparing the size features of a live streaming scene image and a display window provided by an embodiment of the present disclosure. Specifically, there are two different situations. In the schematic diagram (a) on the left side of Fig. 3, the live streaming scene image shown in the dashed-line box is "narrower" than the display window shown in the solid-line box, and in the schematic diagram (b) on the right side of Fig. 3, the live streaming scene image shown in the dashed-line box is "wider" than the show window shown in the solid-line box.

In implementation, in a possible situation, when determining the size feature of the live streaming scene image compared to the display window, the size feature may be determined by calculation, so as to obtain a more accurate size feature.

That is, in a specific implementation, first width information in the width size dimension and first height information in the height size dimension in the original size information of the live streaming scene image are determined, and a first ratio between the first width information and the first height information is determined; second width information in the width dimension and second height information in the height dimension in the window size information of the display window are determined, and a second ratio between the second width information and the second height information is determined; and in response to the first ratio being smaller than or equal to the second ratio, the size feature corresponding to the live streaming image element is determined to be a first size feature; or, in response to the first ratio being greater than the second ratio, the size feature corresponding to the live streaming image element is determined to be a second size feature.

Here, the first size feature means that the live streaming scene image is "narrower" than the display window represented by the solid-line box; and the second size feature means that the live streaming scene image is "wider" than the display window represented by the solid-line box.

In another possible situation, the size feature of the live streaming scene image may also be determined directly. Specifically, since the size feature of the live streaming scene image is mainly used to indicate that the live streaming scene image expresses the "narrower" feature or the "wider" feature compared to the display window, and the live streaming scene image may have these features after the production is confirmed. For example, when the live streaming scene image is set to an image showing a waterfall cascading down, that is, the value expressed by the height information in the height dimension is larger, for example, exceeds the height information of the display window by a first preset multiple, which can express the "narrower" feature compared to the display window; and when the live streaming scene image is set as a classical masterpiece in banner format, that is, the value expressed by the width information in the width dimension is larger, for example, exceeds the width information of the display window by a second preset multiple, which can express the "wider" feature compared to the display window. Therefore, when selecting which image to be used as the live streaming scene image, the size feature can be determined accordingly based on the value of the selected image in at least one size dimension.

After determining the size feature of the live streaming scene image in the display window, a target size dimension may be determined from each size dimension. In a specific implementation, in response to determining the size feature to be the first size feature, the width size dimension is determined as the target size dimension, or in response to determining the size feature to be the second size feature, the height size dimension is determined as the target size dimension.

Specifically, according to the above description of the display method of the live streaming scene image, in a possible situation, when the size feature expresses that the live streaming scene image is "narrow", that is, the size feature is determined to be the first size feature, the width will be aligned, so the selected target size dimension is the width dimension. When determining the display scale, the determined target size dimension is used to determine the ratio of the width information of the original size information in the width dimension to the width information of the window size information in the width dimension as the display scale.

Exemplarily, referring to Fig. 4, which is a schematic diagram of a live streaming scene image obtained after processing the live streaming scene image according to a determined display scale provided by an embodiment of the present disclosure. Here, corresponding to the schematic diagram (a) on the left side in Fig. 3, the schematic diagram (a) on the left side in Fig. 4 shows a schematic diagram of the processed live streaming scene image represented by the dashed-line box and the display window that remains unchanged, after the above process is used to determine that the alignment width processing is performed on the live streaming scene image.

According to the left schematic diagram (a) in Fig. 4, after processing the live streaming scene image, the live streaming scene image is aligned with the width of the display window to ensure that the "narrow" size feature of the live streaming scene image is retained. In the height dimension, the processed live streaming scene images may exceed the display window. These exceeding part may be cropped or not be displayed directly due to the limitation of the display size of the display window.

Similarly, in another possible situation, when the size feature expresses that the live streaming scene image is "wider", that is, the size feature is determined to be the second size feature, the width will be aligned, so the selected target size dimension is the height size dimension. When determining the display scale, the determined target size dimension is used to determine the ratio of the width information of the original size information in the height dimension to the width information of the window size information in the height dimension as the display scale.

Exemplarily, referring to Fig. 4, corresponding to the schematic diagram (b) on the right side in Fig. 3, the schematic diagram (b) on the right side in Fig. 4 shows a schematic diagram of the processed live streaming scene image represented by a dashed-line box and the display window that remains unchanged, after the above process is used to determine that the alignment height processing is performed on the live streaming scene image. In this schematic diagram, the live streaming scene image is aligned with the height of the display window to ensure that the "higher" size feature of the live streaming scene image is retained. Similarly, when the processed live streaming scene image exceeds the display window in the width dimension, the exceeding part may also be processed by cropping or not displaying it directly.

In the case of the above description, the live streaming scene image is zoomed in as much as possible for display, so that the boundary in one size dimension coincides with the window boundary of the display window, and the boundary in the other size dimension exceeds the window boundary to ensure the image zoomed in as much as possible for display. In another possible case, the boundary in one size dimension coincides with the window boundary of the display window, and in the other size dimension, the size of the live streaming scene image is caused to not exceed the size of the display window, such as the live streaming scene image is directly displayed as the style shown in the schematic diagram of Fig. 3.

In this case, since the size of the processed live streaming scene image is smaller than that of the display window, the live streaming scene image may be processed by image supplementation. For example, when the size feature of the live streaming scene is determined to be the first size feature, the supplementation size dimension is determined to be the width size dimension when performing image supplementation on the live streaming scene image, or when the size feature of the live streaming scene is determined to be the second size feature, the supplementation size dimension is determined to be is the height size dimension when image supplementation is performed on the live streaming scene; and then, the live streaming scene image is supplemented in the supplementation size dimension, so that the corresponding aspect ratios of the live streaming scene image after image supplementation and the display window are the same, and thus the live streaming scene image after image supplementation can be scaled to fill the display window after zooming in or out the live streaming scene image after image supplementation.

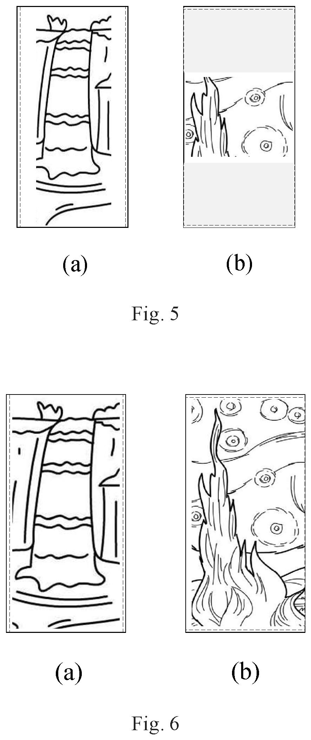

Here, when supplementing the image, solid color supplementation can be performed. For example, the image can be filled according to the overall hue of the live streaming scene image, and/or the image may be filled with a solid color that is similar to the hue of the edge portion in the corresponding size dimension, so as to perform image supplementation on the live streaming scene image. For example, for the above example in Fig. 3, a schematic diagram of the live streaming scene image obtained after performing image supplementation on the live streaming scene image can be obtained as shown in Fig. 5. Corresponding to the left schematic diagram (a) in Fig. 3, the left schematic diagram (a) in Fig. 5 shows a schematic diagram of the live streaming scene image after using white for solid color supplementation, and white is the overall hue of the live streaming scene image, and the live streaming scene image is specifically represented by a dashed-line box. After zooming in or out the size of the live streaming scene image, the size is consistent with the size of the display window. For ease of representation, the solid-line box of the display window is displayed slightly larger in the schematic diagram, but the actual indication of the solid-line box is consistent with the size of the live streaming scene image.

Similarly, corresponding to the right schematic diagram (b) in Fig. 3, the right schematic diagram (b) in Fig. 5 shows a schematic diagram of the live streaming scene image after using gray for solid color supplementation, and gray is the hue of the edge portion of the live streaming scene image. Also for ease of representation, the solid-line box of the display window is shown slightly larger in the right schematic diagram (b) in Fig. 5, but the actual indication of the solid-line box is consistent with the size of the live streaming scene image.

For this filling method, even if an image having a similar hue is added for filling, obvious splicing traces may appear in the display window due to the filling of a solid color. Based on it, in the embodiment of the present disclosure, a pre-trained neural network may be used to supplement the semantics of the live streaming scene image during filling, that is, the filling of a solid color in the above embodiment is changed to the supplementation for a specific image. For example, in the case where the supplementation size dimension is determined, the live streaming scene image can be determined to be semantically supplemented in the supplementation size dimension, and the area that needs to be continuously supplemented and the current live streaming scene image are input into the pre-trained neural network, so that the neural network perform image supplementation on the areas that need to be continuously supplemented, thereby outputting a result image that can fill the display window.

Exemplarily, referring to Fig. 6, which is a schematic diagram of a live streaming scene image obtained after performing semantic supplementation on the live streaming scene image provided by an embodiment of the present disclosure. In the present embodiment, following the corresponding example in Fig. 3, corresponding to the left schematic diagram (a) and the right schematic diagram (b) in Fig. 3, two different live streaming scene images after semantic supplementation in the left schematic diagram (a) and the right schematic diagram (b) in Fig. 6 are obtained, and the corresponding marking method is similar to Fig. 5 and will not be described again here. In this way, since the image semantics are supplemented, the image is more harmonious and richer.

In the embodiment corresponding to the schematic diagram in Fig. 4, the display position of the live streaming scene image in the display window may further be continued to be determined. In a possible situation, a center position corresponding to a window display center of the display window may be determined, and the center position may be determined as the display position of the live streaming scene image, so that an element boundary in the target size dimension for a live streaming scene image after being adjusted based on the display scale coincides with a window boundary of the display window in the target size dimension.

In this case, the live streaming scene image and the display window can be center-aligned, so that the image at the center position in the live streaming scene image is displayed in the display window. Exemplarily, in the left schematic diagram (a) in Fig. 4, the live streaming scene image and the display window are selected to be center-aligned. It can also be seen from the schematic diagram that in the target size dimension, that is, in the width dimension, the element boundary of the live streaming scene image coincides with the boundary of the window corresponding to the display window, that is, the width information changes to the same.

In another possible situation, it is also possible to determine which area in the live streaming scene image after adjusting the ratio expresses richer semantic information, and the area is first adjusted to the display window for display. For example, in the right schematic diagram (b) in Fig. 4, a manually selected or pre-trained image recognition model is used to determine a selected area in which semantic information is richer than other areas, such as an area showing flames in the figure. Then when it is ensured that the element boundary of the live streaming scene image coincides with the boundary of the window corresponding to the display window in the corresponding target size dimension, that is, in the height dimension, the center of the processed live streaming scene image may be moved to the right, so that the selected area that expresses more semantic information is displayed first in the display window.

Here, for a plurality of methods listed above for respectively determining the display position and display scale corresponding to the live streaming image elements, any one of the methods can be selected and combined in an achievable case, which is not limited here.

Secondly, for an interaction control, when determining the display mode of the interaction control in the display window, the determined display parameter information may specifically include a display scale and a display position. Similarly, when zooming in or zooming out the interaction control, the proportional size change is selected to avoid deformation caused by being stretched or compressed in the width dimension or the height dimension. In addition, since the interaction control can be specifically used for operation triggering, therefore, it is different from the above-mentioned requirement for displaying the live streaming scene image, cropping is not allowed when displaying interaction control.

Based on the above requirement, and in actual application scenarios, in order to adapt to the user's usage habits, it will be selected that regardless of how the size of the display window changes, the interactive control is caused to be displayed in the display window to adapt to the size of the display window and displayed at a relatively fixed position interaction control. For example, when the display window is 480px × 960px, the chat interaction control is displayed at a central position 30px away from the left window boundary of the display window, and when the display window is changed to 960px × 960px, the chat interaction control is accordingly zoomed in for display due to the size of the display window becomes larger, but the chat interaction control is still selected to be displayed in the enlarged display window and at a central position 30px away from the left window boundary of the display window.

In specific implementation, the following method may be selected: determining a display scale in the display window for the interaction control based on standard window size information that is preset and the window size information of the display window; where the standard window size information is used to determine original size information corresponding to the interaction control; and determining a display position of the interaction control in a current display window based on a target boundary distance between the interaction control and the display window under the standard window size information, so that a boundary distance between the interaction control at the display position and the current display window maintains the target boundary distance.

That is, a standard window may be designed first, and the size information of the standard window is specifically determined as the standard window size information in the embodiment of the present disclosure. Under this standard window, the display position and display scale of the interaction control can be determined. Specifically, when designing an interaction control, in a possible situation, in order to design the details of the interaction control, a larger-sized pattern will be selected and designed accordingly. In the standard window, a mode of reducing the scale is selected to display the interaction control with an appropriate size. Here, the display scale selected under the standard window can be expressed as $S_0$, for example.

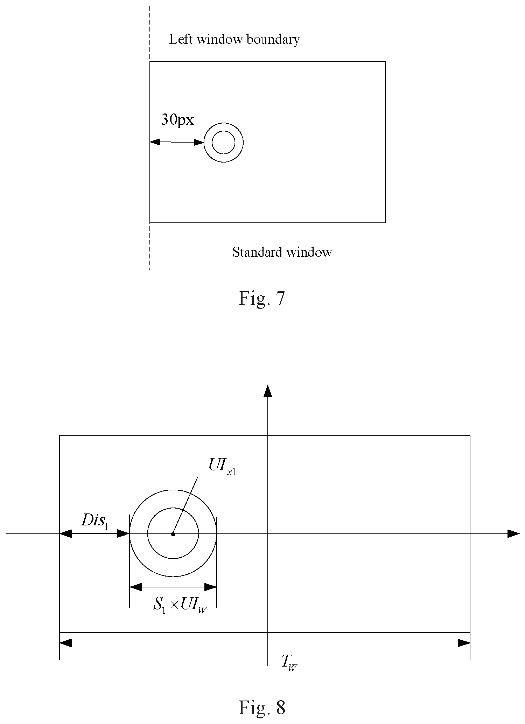

In addition, when selecting the display scale $S_0$ to display the interaction control, the specific display position in the standard window can be set. For example, it may be selected to set the interaction control at a center position $Dis_0$ away from the left window boundary of the standard window for display. Exemplarily, referring to Fig. 7, it is a schematic diagram of a standard window provided by an embodiment of the present disclosure. Specifically, in the embodiment of the present disclosure, the distance between the interaction control and a window boundary of the standard window may be set unchanged. For example, in Fig. 7, the distance 30px between the interaction control and the left window boundary of the standard window remains unchanged, and the interaction control is set at the center of the standard window in height.

In one possible situation, when the size of the display window determined in the current live streaming scene is consistent with the size of the standard window, the display scale and display position determined for the standard window can be directly selected and used to display the interaction control.

In another possible case, when the size of display window determined in the current live streaming scene is inconsistent with the size of the standard window, a ratio between the standard window size information and the window size information of the display window in a preset size dimension may be determined, to determine the display scale of the interaction control in the display window based on the ratio in the preset size dimension and original size information corresponding to the interaction control.

Here, the preset size dimension may specifically be a dimension in which a fixed relative position is set. For example, in the above example, the interaction control is set to be displayed at the center position in the height dimension, then the preset size dimension is set to the height dimension. Continuing to illustrate based on the example, in the height dimension, the height information in the preset standard window size information is indicated as $T_H$, and the height information in the window size information of the current display window is indicated as $V_H$, then the determined display scale $S_1$ is:

$$S_1 = S_0 \times \frac{V_H}{T_H}.$$

For the current display window, it is determined that the distance $Dis_1$ from the left window boundary maintains the same as $Dis_0$, that is, $Dis_1 = Dis_0$. In order to facilitate determining an accurate position, referring to Fig. 8, it is a schematic diagram of a coordinate system determined for a current display window provided by an embodiment of the present disclosure. The origin of the coordinate system is set at the center of the current display window, and the coordinate axes are set according to the height direction and width direction of the current display window. In the figure, the width information $T_W$ of the current display window, the distance $Dis_1$ between the interaction control and the left window boundary of the current display window, and the coordinate $UI_{x1}$ of the center of the interaction control in the coordinate system are labeled. On this basis, the width information of the interactive control in the width dimension is set to be $S_1 \times UI_W$ ($UI_W$ is the width information corresponding to the designed interaction control), and the boundary distance $Dis_1$ can be obtained and satisfies the following formula:

$$Dis_1 = UI_{x1} - \frac{S_1 \times UI_W}{2} - \frac{T_W}{2} \quad (1).$$

Similarly, in the standard window, the boundary distance $Dis_0$ satisfies the following formula, where the coordinate of the center of the interaction control in the coordinate system of the standard window is indicated as $UI_{x0}$, and the corresponding display scale is indicated as $S_0$:

$$Dis_0 = UI_{x0} - \frac{S_0 \times UI_W}{2} - \frac{T_W}{2} \quad (2).$$

Therefore, when maintaining the boundary distance $Dis_0$ in the standard window, the boundary distance $Dis_0$ is determined as the target boundary distance, and by combining the above formula (1) and formula (2), the coordinate $UI_{x1}$ of the center of the interaction control in the current display window in the coordinate system can be obtained.

$$UI_{x1} = UI_{x0} + \frac{V_W - T_W}{2} \times (\frac{UI_W}{T_W} \times S_0 + 1) \quad (3).$$

That is, when the target display distance is determined in the standard window, the coordinate position of the interaction control in the current display window can be calculated through the above formula (3).

Thus, through the method provided by the above embodiment, the corresponding display scale and display position can be determined for the live streaming image element based on the currently determined display window.

For the above S203, when the corresponding display scale and display position are determined for the live streaming image element, the original size information of the live streaming image element may be adjusted according to the display scale, so that based on the determined display position, the target live streaming image element after adjustment in size information is displayed in the display window.

Here, in a possible case, according to the description in the above embodiment, when the window size information of the current display window is determined, the display scale and the display position in the current display window may be determined according to the original size information of the live streaming scene image, the standard window size information of the standard window, the original size information of the interaction control, etc., that are acquired in advance. Therefore, when the multiple types of window size information that may occur as the current display window can be determined in advance, the display parameter information corresponding to these possible current display windows can be determined in advance, and then the corresponding data is invoked according to the actual selection situation, so as to quickly respond to the display of the live streaming image element.

Specifically, display parameter information corresponding to a current display window may be determined from candidate display scales and candidate display positions corresponding to sizes of a plurality of preset display windows respectively. Here, the plurality of preset display windows, that is, windows that may be displayed as the current display window described in the above example. For each possible display window, the corresponding display parameter information can be stored in advance, and when the live streaming image element is determined to be displayed, the current display window selected for display is used to display through the stored display parameter information.

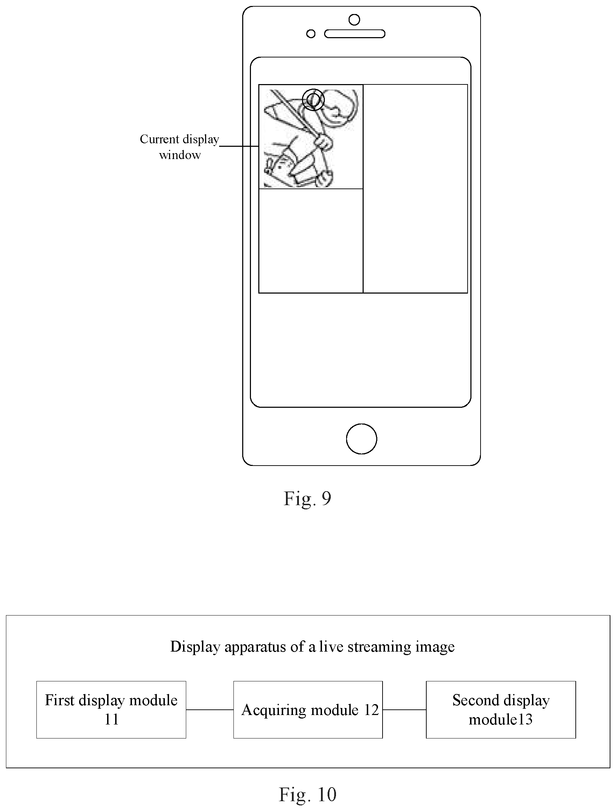

Exemplarily, referring to Fig. 9, it is a schematic diagram of displaying a live streaming image element in a current display window provided by an embodiment of the present disclosure. In this schematic diagram, the example listed in the schematic diagram (a) on the left side in Fig. 1 is continued, but the processing situation is different from the processing situation of the schematic diagram (b) on the right side in Fig. 1, and the specific method provided above in the embodiment of the present disclosure is used to obtain the situation displayed in the current display window as shown in Fig. 9. It is easy to see that compared with the deformation of the live streaming scene image in the right schematic diagram (b) in Fig. 1, the image can be displayed normally in the current display window in Fig. 9. Compared with the right schematic diagram (b) in Fig. 1 where the interaction control cannot be completely displayed, in the current display window in Fig. 9, even if the window size becomes smaller, the interaction control can also be completely displayed and still complies with the user's selection habits, the interaction control continues to be displayed at a specific central ceiling position, so it is more convenient for users to use when selecting and triggering.

Those skilled in the art can understand that in the above method of the specific embodiments, the order in which each step is written does not mean a strict execution order but constitutes any limitation on the implementation process, and the specific execution order of each step should be determined by its function and possible internal logic.

Based on the same inventive concept, the embodiments of the present disclosure further provide a display apparatus of a live streaming image corresponding to the display method of a live streaming image. Since the problem-solving principle of the apparatus in the embodiments of the present disclosure is the same as the above-mentioned display method of a live streaming image in the embodiments of the present disclosure. Similarly, the implementation of the apparatus may be referred to the implementation of the method, and the repeated parts will not be described again.

Referring to Fig. 10, which is a schematic diagram of a display apparatus of a live streaming image provided by an embodiment of the present disclosure, the apparatus includes a first display module 11, an acquiring module 12 and a second display module 13.

The first display module 11 is configured to display at least one display window that matches a current live streaming scene according to the current live streaming scene.

The acquiring module 12 is configured to acquire display parameter information of a live streaming image element in the display window; where the live streaming image element includes a live streaming scene image and/or an interaction control, and the display parameter information is determined based on window size information of the display window and original size information corresponding to a live streaming image element to be displayed in the display window.

The second display module 13 is configured to adjust the original size information corresponding to the live streaming image element to be displayed according to a display scale indicated by the display parameter information, to obtain target size information after adjustment, and display, in the display window, a live streaming image element with the target size information based on a display position indicated by the display parameter information.

In an optional implementation, for the live streaming scene image included in the live streaming image element, the display parameter information includes a display scale, and the acquiring module 12 is configured to determine display parameter information of the live streaming scene image in the display window according to following steps: determining a size feature of the live streaming scene image in the display window, based on size information of original size information of the live streaming scene image and size information of the window size information of the display window in at least one size dimension respectively; where the at least one size dimension includes a width size dimension and a height size dimension; determining a target size dimension from the at least one size dimension based on the size feature of the live streaming scene image; and determining a ratio between size information corresponding to the original size information of the live streaming scene image in the target size dimension and size information corresponding to the window size information of the display window in the target size dimension, as the display scale.

In an optional implementation, when determining the size feature of the live streaming scene image in the display window, based on the size information of the original size information of the live streaming scene image and the window size information of the display window in the at least one size dimension respectively, the acquiring module 12 is configured to: determine first width information in the width size dimension and first height information in the height size dimension in the original size information of the live streaming scene image, and determine a first ratio between the first width information and the first height information; determine second width information in the width dimension and second height information in the height dimension in the window size information of the display window, and determine a second ratio between the second width information and the second height information; and in response to the first ratio being smaller than or equal to the second ratio, determine the size feature corresponding to the live streaming image element to be a first size feature; or, in response to the first ratio being greater than the second ratio, determine the size feature corresponding to the live streaming image element to be a second size feature. When determining the target size dimension from the at least one size dimension based on the size feature of the live streaming scene image, the acquiring module 12 is configured to: in response to determining the size feature to be the first size feature, determine the width size dimension as the target size dimension, or, in response to determining the size feature to be the second size feature, determine the height size dimension as the target size dimension.

In an optional implementation, for the live streaming scene image included in the live streaming image element, the display parameter information includes a display position, and the acquiring module 12 is configured to determine the display parameter information of the live streaming image element in the display window according to following steps: determining a center position corresponding to a window display center of the display window, and determining the center position as the display position of the live streaming scene image, so that an element boundary in the target size dimension for a live streaming scene image after being adjusted based on the display scale coincides with a window boundary of the display window in the target size dimension.

In an optional implementation, for the interaction control included in the live streaming image element, the display parameter information includes a display scale and a display position; and the acquiring module 12 is configured to determine display parameter information of the interaction control in the display window according to following steps: determining a display scale in the display window for the interaction control based on standard window size information that is preset and the window size information of the display window; and determining a display position of the interaction control in the display window based on a target boundary distance between the interaction control and the display window under the standard window size information, so that a boundary distance between the interaction control at the display position and a current display window maintains the target boundary distance.

In an optional implementation, when determining the display scale in the display window for the interaction control based on the standard window size information that is preset and the window size information of the display window, the acquiring module 12 is configured to: determine a ratio between the standard window size information and the window size information of the display window in a preset size dimension, to determine the display scale of the interaction control in the display window based on the ratio in the preset size dimension and the original size information corresponding to the interaction control.

In an optional implementation, when acquiring the display parameter information of the live streaming image element in the display window, the acquiring module 12 is configured to determine display parameter information corresponding to a current display window from candidate display scales and candidate display positions corresponding to a plurality of preset display window sizes respectively.

For the description of the processing flow of each module in the apparatus and the interaction flow between each module, please refer to the relevant descriptions in the above method embodiments, and will not be described in detail here.

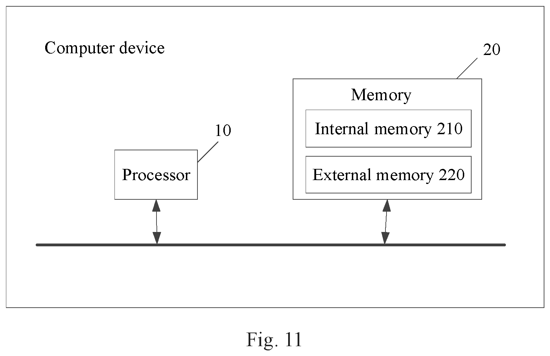

An embodiment of the present disclosure further provides a computer device. As shown in Fig. 11, it is a schematic structural diagram of a computer device provided by an embodiment of the present disclosure.

The computer device includes a processor 10 and a memory 20. The memory 20 stores machine-readable instructions executable by the processor 10, and the processor 10 is configured to execute the machine-readable instructions stored in the memory 20. When the machine-readable instructions are executed by the processor 10, the processor 10 performs the following steps:

displaying at least one display window that matches a current live streaming scene according to the current live streaming scene; acquiring display parameter information of a live streaming image element in the display window; where the live streaming image element includes a live streaming scene image and/or an interaction control, and the display parameter information is determined based on window size information of the display window and original size information corresponding to a live streaming image element to be displayed in the display window; and adjusting the original size information corresponding to the live streaming image element to be displayed according to a display scale indicated by the display parameter information, to obtain target size information after adjustment, and displaying, in the display window, a live streaming image element with the target size information based on a display position indicated by the display parameter information.

The memory 20 includes an internal memory 210 and an external memory 220. The internal memory 210 here is also called an internal storage, which is used to temporarily store operation data in the processor 10 and data exchanged with an external memory 220 such as a hard disk, etc., and the processor 10 exchanges data with the external memory 220 through the internal memory 210.

The specific execution process of the above instructions may refer to the steps of the display method of a live streaming image described in the embodiments of the present disclosure, and will not be described again here.

An embodiment of the present disclosure further provides a computer-readable storage medium. A computer program is stored on the computer-readable storage medium. When the computer program is executed by a processor, the steps of the display method of a live streaming image described in the above method embodiment are executed. The storage medium may be a volatile or non-volatile computer-readable storage medium.

An embodiment of the present disclosure further provides a computer program product, which carries program code, and the program code includes instructions that can be used to execute the steps of the display method of a live streaming image described in the above method embodiments. For details, please refer to the above method implementations, and the details will not be described again here.

The above computer program product may be specifically implemented by hardware, software or a combination thereof. In an optional embodiment, the computer program product is embodied as a computer storage medium. In another optional embodiment, the computer program product is embodied as a software product, such as a Software Development Kit (SDK), etc.

Those skilled in the art can clearly understand that for the convenience and simplicity of description, the specific working processes of the systems and apparatuses described above can refer to the corresponding processes in the foregoing method embodiments, and will not be described again here. In several embodiments provided by the present disclosure, it should be understood that the disclosed systems, apparatuses and methods may be implemented in other ways. The apparatus embodiments described above are only illustrative. For example, the division of the units is only a logical function division. In actual implementation, there may be other division modes. For example, a plurality of units or components may be combined or may be integrated into another system, or some features may be ignored or may not be implemented. On the other hand, the coupling, direct coupling or communication connection between each other shown or discussed may be indirect coupling or communication connection of devices or units through some communication interface, and may be electrical, mechanical or other forms.

The units described as separate components may or may not be physically separated. The components shown as units may be or may not be physical units, i.e., may be located in one place, or may also be distributed over multiple network units. Some or all of the units may be selected according to actual needs to achieve the purpose of the solution of the present embodiment.

In addition, each functional unit in each embodiment of the present disclosure may be integrated into one processing unit, each unit may exist physically alone, or two or more than two units may be integrated into one unit.

If the functions are implemented in the form of software functional units and sold or used as independent products, they can be stored in a non-volatile computer-readable storage medium executable by a processor. Based on this understanding, the technical solution of the present disclosure, the part that contributes to the existing technology or the part of the technical solution may be embodied in the form of a software product, and the computer software product is stored in a storage medium. Several instructions are included to cause a computer device (which may be a personal computer, a server, or a network device, etc.) to perform all or part of the steps of the methods described in each embodiment of the present disclosure. The aforementioned storage medium includes a medium that can store program code, such as USB flash disk, a removable hard disk, a Read-Only Memory (ROM), a Random Access Memory (RAM), a magnetic disk, an optical disk, etc.

Finally, it should be noted that: the above-described embodiments are only specific implementation modes of the present disclosure, and are used to illustrate the technical solutions of the present disclosure, but not to limit them. Although the present disclosure has been described in detail with reference to the foregoing embodiments, those of ordinary skill in the art should understand that any person familiar with the technical field can still modify the technical solutions described in the previous embodiments within the technical scope disclosed in the present disclosure, easily think of changes, or make equivalent substitutions to some technical features. However, these modifications, changes or substitutions do not cause the essence of the corresponding technical solution to deviate from the spirit and scope of the technical solution of the embodiments of the present disclosure, and should all be included in the protection scope of the present disclosure. Therefore, the protection scope of the present disclosure should be determined by the protection scope of the claims.

**Claims**

1. A display method of a live streaming image, comprising:

   displaying at least one display window that matches a current live streaming scene according to the current live streaming scene;
   acquiring display parameter information of a live streaming image element in the display window; wherein
   the live streaming image element comprises a live streaming scene image and/or an interaction control, and the display parameter information is determined based on window size information of the display window and original size information corresponding to a live streaming image element to be displayed in the display window; and
   adjusting the original size information corresponding to the live streaming image element to be displayed according to a display scale indicated by the display parameter information, to obtain target size information after adjustment, and displaying, in the display window, a live streaming image element with the target size information based on a display position indicated by the display parameter information.

2. The display method according to claim 1, wherein, for the live streaming scene image comprised in the live streaming image element, the display parameter information comprises a display scale, and display parameter information of the live streaming scene image in the display window is determined according to following steps:

determining a size feature of the live streaming scene image in the display window, based on size information of original size information of the live streaming scene image and size information of the window size information of the display window in at least one size dimension respectively; wherein the at least one size dimension comprises a width size dimension and a height size dimension;

determining a target size dimension from the at least one size dimension based on the size feature of the live streaming scene image; and determining a ratio between size information corresponding to the original size information of the live streaming scene image in the target size dimension and size information corresponding to the window size information of the display window in the target size dimension, as the display scale.

3. The display method according to claim 2, wherein the determining a size feature of the live streaming scene image in the display window, based on size information of original size information of the live streaming scene image and size information of the window size information of the display window in at least one size dimension respectively, comprises:

determining first width information in the width size dimension and first height information in the height size dimension in the original size information of the live streaming scene image, and determining a first ratio between the first width information and the first height information; determining second width information in the width dimension and second height information in the height dimension in the window size information of the display window, and determining a second ratio between the second width information and the second height information; and

in response to the first ratio being smaller than or equal to the second ratio, determining the size feature corresponding to the live streaming image element to be a first size feature; or, in response to the first ratio being greater than the second ratio, determining the size feature corresponding to the live streaming image element to be a second size feature; and wherein the determining a target size dimension from the at least one size dimension based on the size feature of the live streaming scene image, comprises:

in response to determining the size feature to be the first size feature, determining the width size dimension as the target size dimension, or, in response to determining the size feature to be the second size feature, determining the height size dimension as the target size dimension.

4. The display method according to any one of claims 1-3, wherein for the live streaming scene image comprised in the live streaming image element, the display parameter information comprises a display position, and the display parameter information of the live streaming image element in the display window is determined according to following steps: determining a center position corresponding to a window display center of the display window, and determining the center position as the display position of the live streaming scene image, so that an element boundary in the target size dimension for a live streaming scene image after being adjusted based on the display scale coincides with a window boundary of the display window in the target size dimension.

5. The display method according to any one of claims 1-4, wherein, for the interaction control comprised in the live streaming image element, the display parameter information comprises a display scale and a display position; and display parameter information of the interaction control in the display window is determined according to following steps:

determining a display scale in the display window for the interaction control based on standard window size information that is preset and the window size information of the display window; and determining a display position of the interaction control in the display window based on a target boundary distance between the interaction control and the display window under the standard window size information, so that a boundary distance between the interaction control at the display position and a current display window maintains the target boundary distance.

6. The display method according to claim 5, wherein the determining a display scale in the display window for the interaction control based on standard window size information that is preset and the window size information of the display window, comprises: determining a ratio between the standard window size information and the window size information of the display window in a preset size dimension, to determine the display scale of the interaction control in the display window based on the ratio in the preset size dimension and original size information corresponding to the interaction control.

7. The display method according to any one of claims 1-6, wherein the acquiring display parameter information of a live streaming image element in the display window, comprises:
determining display parameter information corresponding to a current display window from candidate display scales and candidate display positions corresponding to a plurality of preset display window sizes respectively.

8. A display apparatus of a live streaming image, comprising:

a first display module, configured to display at least one display window that matches a current live streaming scene according to the current live streaming scene;
an acquiring module, configured to acquire display parameter information of a live streaming image element in the display window; wherein the live streaming image element comprises a live streaming scene image and/or an interaction control, and the display parameter information is determined based on window size information of the display window and original size information corresponding to a live streaming image element to be displayed in the display window; and
a second display module, configured to adjust the original size information corresponding to the live streaming image element to be displayed according to a display scale indicated by the display parameter information, to obtain target size information after adjustment, and display, in the display window, a live streaming image element with the target size information based on a display position indicated by the display parameter information.

9. The display apparatus according to claim 8, wherein for the live streaming scene image comprised in the live streaming image element, the display parameter information comprises a display scale, and the acquiring module is configured to determine display parameter information of the live streaming scene image in the display window according to following steps:

determining a size feature of the live streaming scene image in the display window, based on size information of original size information of the live streaming scene image and size information of the window size information of the display window in at least one size dimension respectively; wherein the at least one size dimension comprises a width size dimension and a height size dimension;
determining a target size dimension from the at least one size dimension based on the size feature of the live streaming scene image; and

determining a ratio between size information corresponding to the original size information of the live streaming scene image in the target size dimension and size information corresponding to the window size information of the display window in the target size dimension, as the display scale.

10. The display apparatus according to claim 9, wherein when determining the size feature of the live streaming scene image in the display window, based on the size information of the original size information of the live streaming scene image and the window size information of the display window in the at least one size dimension respectively, the acquiring module is configured to:

determine first width information in the width size dimension and first height information in the height size dimension in the original size information of the live streaming scene image, and determine a first ratio between the first width information and the first height information;
determine second width information in the width dimension and second height information in the height dimension in the window size information of the display window, and determine a second ratio between the second width information and the second height information; and
in response to the first ratio being smaller than or equal to the second ratio, determine the size feature corresponding to the live streaming image element to be a first size feature; or, in response to the first ratio being greater than the second ratio, determine the size feature corresponding to the live streaming image element to be a second size feature; and
when determining the target size dimension from the at least one size dimension based on the size feature of the live streaming scene image, the acquiring module is configured to:
in response to determining the size feature to be the first size feature, determine the width size dimension as the target size dimension, or, in response to determining the size feature to be the second size feature, determine the height size dimension as the target size dimension.

11. The display apparatus according to any one of claims 8-10, wherein for the live streaming scene image comprised in the live streaming image element, the display parameter information comprises a display position, and the acquiring module is configured to determine the display parameter information of the live streaming image element in the display window according to following steps:
determining a center position corresponding to a window display center of the display window, and determining the center position as the display position of the live streaming scene image, so that an element boundary in the target size dimension for a live streaming scene image after being adjusted based on the display scale coincides with a window boundary of the display window in the target size dimension.

12. The display apparatus according to any one of claims 8-11, wherein, for the interaction control comprised in the live streaming image element, the display parameter information comprises a display scale and a display position; and the acquiring module is configured to determine display parameter information of the interaction control in the display window according to following steps:

determining a display scale in the display window for the interaction control based on standard window size information that is preset and the window size information of the display window; and

determining a display position of the interaction control in the display window based on a target boundary distance between the interaction control and the display window under the standard window size information, so that a boundary distance between the interaction control at the display position and a current display window maintains the target boundary distance.

13. The display apparatus according to claim 12, wherein when determining the display scale in the display window for the interaction control based on the standard window size information that is preset and the window size information of the display window, the acquiring module is configured to:
determine a ratio between the standard window size information and the window size information of the display window in a preset size dimension, to determine the display scale of the interaction control in the display window based on the ratio in the preset size dimension and the original size information corresponding to the interaction control.

14. The display apparatus according to any one of claims 8-13, wherein when acquiring the display parameter information of the live streaming image element in the display window, the acquiring module is configured to:
determine display parameter information corresponding to a current display window from candidate display scales and candidate display positions corresponding to a plurality of preset display window sizes respectively.

15. A computer device, comprising: a processor and a memory, wherein the memory stores machine-readable instructions executable by the processor, and the processor is configured to execute the machine-readable instructions stored in the memory, and when the machine-readable instructions are executed by the processor, the processor executes steps of the display method of a live streaming image according to any one of claims 1 to 7.

16. A computer-readable storage medium, wherein a computer program is stored on the computer-readable storage medium, and when the computer program is run by a computer device, the computer device executes steps of the display method of a live streaming image according to any one of claims 1 to 7.

Display
window A

Display
window A

(a)                                        (b)

Fig. 1

| According to a current live streaming scene, displaying at least one display window that matches the current live streaming scene | S201 |
|---|---|
| Acquiring display parameter information of a live streaming image element in the display window; where the live streaming image element includes a live streaming scene image and/or an interaction control, and the display parameter information is determined based on window size information of the display window and original size information corresponding to a live streaming image element to be displayed in the display window | S202 |
| Adjusting the original size information corresponding to the live streaming image element to be displayed according to a display scale indicated by the display parameter information, to obtain target size information after adjustment, and displaying, in the display window, a live streaming image element under the target size information based on a display position indicated by the display parameter information | S203 |

Fig. 2

(a)                    (b)

Fig. 3

(a)                                    (b)

Fig. 4

(a)　　　　　　　　(b)

Fig. 5

(a)　　　　　　　　(b)

Fig. 6

Left window boundary

30px

Standard window

Fig. 7

$UI_{x1}$

$Dis_1$

$S_1 \times UI_W$

$T_W$

Fig. 8

Current display window

Fig. 9

Display apparatus of a live streaming image

| First display module 11 | Acquiring module 12 | Second display module13 |

Fig. 10

Fig. 11

## INTERNATIONAL SEARCH REPORT

| International application No. |
| --- |
| **PCT/CN2024/106443** |

| A. | CLASSIFICATION OF SUBJECT MATTER |
| --- | --- |

H04N 21/431(2011.01)i; H04N 21/485(2011.01)i; H04N 21/2187(2011.01)i

According to International Patent Classification (IPC) or to both national classification and IPC

| B. | FIELDS SEARCHED |
| --- | --- |

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNTXT, CNABS, WPABS, WPABSC, ENTXT, ENTXTC, DWPI, CNKI, IEEE: 直播, 场景, 画面, 展示, 显示, 参数, 位置, 尺寸, 大小, 窗口, 缩放, 裁剪, 宽度, 高度, live, scene, picture, display, parameter, position, dimension, size, window, scale, clip, adjust, width, height

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117082284 A (BEIJING ZITIAO NETWORK TECHNOLOGY CO., LTD.) 17 November 2023 (2023-11-17) <br> description, paragraphs [0110]-[0132], and claims 1-10 | 1-16 |
| X | CN 114710681 A (GUANGZHOU CUBESILI INFORMATION TECHNOLOGY CO., LTD.) 05 July 2022 (2022-07-05) <br> description, paragraphs [0087]-[0168] | 1-16 |
| A | CN 109511007 A (GUANGZHOU BAIGUOYUAN INFORMATION TECHNOLOGY CO., LTD.) 22 March 2019 (2019-03-22) <br> entire document | 1-16 |
| A | CN 115174983 A (BEIJING DAJIA INTERNET INFORMATION TECHNOLOGY CO., LTD.) 11 October 2022 (2022-10-11) <br> entire document | 1-16 |
| A | WO 2023098576 A1 (BEIJING ZITIAO NETWORK TECHNOLOGY CO., LTD.) 08 June 2023 (2023-06-08) <br> entire document | 1-16 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **03 September 2024** | **09 September 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/106443**

| Patent document cited in search report | | | Publication date (day/month/year) | Patent family member(s) | | | Publication date (day/month/year) |
|---|---|---|---|---|---|---|---|
| CN | 117082284 | A | 17 November 2023 | None | | | |
| CN | 114710681 | A | 05 July 2022 | None | | | |
| CN | 109511007 | A | 22 March 2019 | None | | | |
| CN | 115174983 | A | 11 October 2022 | None | | | |
| WO | 2023098576 | A1 | 08 June 2023 | CN | 114125485 | A | 01 March 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310906588